Europäisches Patentamt

European Patent Office

Office européen des brevets

(11) Numéro de publication: **0 277 440 B1**

# FASCICULE DE BREVET EUROPEEN

(45) Date de publication de fascicule du brevet: **25.03.92**

(51) Int. Cl.5: **G07F 7/02**, G07F 7/08

(21) Numéro de dépôt: **87402851.7**

(22) Date de dépôt: **15.12.87**

(54) **Système de fourniture de prestations à revalidation.**

(30) Priorité: **19.12.86 FR 8617800**

(43) Date de publication de la demande:
**10.08.88 Bulletin 88/32**

(45) Mention de la délivrance du brevet:
**25.03.92 Bulletin 92/13**

(84) Etats contractants désignés:
**BE CH DE ES FR GB IT LI NL SE**

(56) Documents cités:
FR-A- 2 522 850     FR-A- 2 528 197
FR-A- 4 016 404     GB-A- 2 057 172
US-A- 4 016 404     US-A- 4 204 113

(73) Titulaire: **SCHLUMBERGER INDUSTRIES
50, avenue Jean Jaurès
F-92120 Montrouge(FR)**

(72) Inventeur: **Guion, Christian
28, Allée du Moulin de Migneaux
F-91370 Verrières le Buisson(FR)**

(74) Mandataire: **Dronne, Guy et al
Cabinet BEAU de LOMENIE, 55, rue d'Amsterdam
F-75008 Paris(FR)**

## Description

La présente invention concerne un système de fourniture de prestations à revalidations.

De façon plus précise l'invention concerne un tel système dans lequel l'usager utilise un support d'informations portatif, par exemple une carte, représentant une valeur fiduciaire initiale et dont il se sert à chaque fois qu'il veut obtenir cette prestation ou ces prestations, le solde disponible sur la carte étant réactualisé après chaque fourniture de prestation. Lorsque le solde de la carte devient nul l'usager peut faire recharger sa carte à une nouvelle valeur fiduciaire en acquittant le montant correspondant.

On connait des cartes dites à prépaiement que l'on peut acheter auprès d'un organisme fournisseur de prestations et qui comportent des moyens de mémorisation magnétique ou électronique de montants de solde. Avec des telles cartes, le solde, à chaque fourniture de prestation, est diminué d'un montant correspondant à la prestation fournie. Lorsque la totalité du montant initial a été utilisé, la carte est jetée. Ce système est bien connu pour les téléphones publics, pour la distribution d'essence ou pour le règlement de taxes de stationnement. Le poste téléphonique ou la pompe à essence est muni d'un "lecteur de cartes" qui identifie la carte et qui décrémente celle-ci d'un montant correspondant à la communication téléphonique établie ou à la quantité d'essence distribuée.

L'inconvénient de telles cartes est que leur coût de fabrication n'est pas négligeable comparé au montant nécessairement réduit que l'usager accepte de "pré-payer" pour obtenir la fourniture de prestation prévue.
Pour remédier à cet inconvénient on a proposé des cartes dites "rechargeables" ou revalidables, c'est-à-dire des cartes dans lesquelles, lorsque la totalité du montant initial est épuisé, il est possible d'effectuer l'enregistrement d'un nouveau solde moyennant le paiement du montant rechargé dans la carte. Le problème lié à ce type de carte consiste bien sûr à éviter que le détenteur de la carte puisse recharger frauduleusement celle-ci lui-même sans avoir effectué le versement correspondant auprès de l'organisme prestataire de service. Pour ce faire, on a proposé de diviser la mémoire d'enregistrement des montants en plusieurs zones validables successivement. Pour contrôler la licéité des validations successivement, la carte comporte dans sa mémoire une zone de validation des zones de montants validables successivement. L'accès à la zone de validation n'est possible que par l'intermédiaire d'une clé secrète de codage qui est stockée dans la carte. C'est ce qui est décrit dans le document US-A-4 204 113.

Les défauts d'un tel système apparaissent clairement. D'une part, il est inapplicable au cas d'une carte à mémoire magnétique. D'autre part, dans le cas d'une carte à mémoire électronique, il nécessite en plus de la mémoire, des circuits de contrôle d'accès qui sont complexes et donc onéreux.

Le document US-A-4 016 404 décrit une carte de crédit dans laquelle le numéro d'identification est écrit dans la mémoire sous une forme "brouillée" (scrambling). Les bits représentant l'information d'identification sont disposés de façon aléatoire. Un code de désembrouillage est également écrit. Les bits correspondant au code sont dispersés au milieu des bits d'information. Un tel système ne permet cependant pas d'enregistrer de façon sécurisée des informations successives de montants.

Pour remédier à ces inconvénients, un objet de l'invention est de fournir un système de fourniture de prestations utilisant des supports portatifs d'informations, qui soit compatible avec un enregistrement magnétique des soldes successifs et qui permette des rechargements successifs de ce support d'informations dans des conditions de sécurité acceptables.

Pour atteindre ce but, l'invention est basée sur le principe suivant : les moyens de mémorisation du support d'informations sont constitués par une pluralité de "points" d'informations. Globalement les moyens de mémorisation comportent une zone de validation et plusieurs zones de dépense validables successivement. La zone de validation contient autant de points de validation qu'il y a de zones de dépense, et chaque zone de dépense contient autant de points de dépense que d'unités de fourniture de prestation. Mais, selon l'invention, les localisations ou adresses des points de validation et des points de dépense sont pseudo-aléatoires de telle sorte qu'un fraudeur ne peut savoir si un point occupant une localisation donnée ou une adresse donnée est un point de validation ou un point de dépense. Pour traiter ces supports d'information les lecteurs de cartes comportent des moyens pour définir parmi les différents points la localisation de ceux qui sont des points de dépense et de ceux qui sont des points de validation. Cette définition est effectuée par la mise en oeuvre d'un algorithme secret qui fait intervenir un paramètre constitué par une information fixe stockée dans le support d'informations et propre à chaque support.

On comprend qu'ainsi il existe un très grand nombre de définitions des localisations des points de validation et des points de dépense. Il en résulte que, même si un fraudeur utilisait licitement une carte pour repérer les adresses physiques des points de validation et des points de dépense de cette carte particulière, cela ne lui servirait à rien pour valider frauduleusement les différentes zones de dépense d'une autre carte, puisque celle-ci aurait une définition différente des localisations des points de la mémoire.

Plus précisément, pour atteindre ce but, le système de fourniture de prestations à revalidation est conforme aux caractéristiques de la revendication 1 annexée.

Selon un mode perfectionné de mise en oeuvre de l'invention, le lecteur de cartes comporte en outre un circuit de détection de configurations anormales des points inscrits dans la mémoire d'une carte. Ii y a configuration anormale si la carte comporte des points de dépense qui sont inscrits alors que le point de validation correspondant n'est pas inscrit. Cela pourra également être le cas si, dans une zone correctement validée, les points de crédit inscrits ne sont pas ceux qui auraient dus l'être en premier selon le fonctionnement normal du lecteur de cartes. Cela est encore le cas si un point de validation a été inscrit alors que d'autres points de validation qui auraient du être inscrits avant ne le sont pas. Bien entendu si une configuration anormale est détectée la carte est invalidée.

D'autres caractéristiques et avantages de l'invention apparaîtront plus clairement à la lecture de la description qui suit de plusieurs modes de mise en oeuvre de l'invention.donnés à titre d'exemples non limitatifs. La description se réfère au dessin annexé sur lequel :

La figure 1 est un diagramme montrant un exemple de correspondance entre les adresses de référence des points de mémoire et les adresses physiques de ces mêmes points,

La figure 2 est un schéma simplifié d'une machine de fourniture de prestation fonctionnant conformément à l'invention,

La figure 3 est un organigramme expliquant le fonctionnement de la machine de la figure 2, et

La figure 4 est un diagramme semblable à celui de la figure 1, illustrant un système de fourniture de prestations multiples.

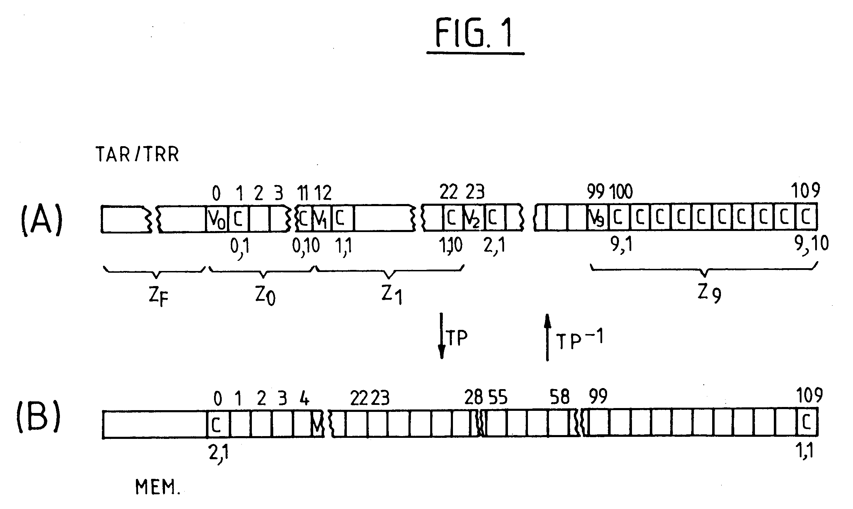

Avant de décrire en détails le système on va en exposer le principe en référant à la figure 1.

Le système de fourniture de prestations fonctionne avec des cartes à mémoire et des machines de fourniture de prestations capables de lire les informations mémorisées dans la carte, de fournir une prestation pour un montant demandé par l'usager si des conditions prédéterminées sont vérifiées, et de débiter la carte d'un montant correspondant à la prestation reçue.

Les cartes utilisées sont à revalidation. Cela signifie donc que la mémoire de la carte est divisée en un certain nombre de zones donnant chacune droit à la fourniture d'un montant de prestations déterminé. Lorsque le montant correspondant à une zone est consommé, il faut qu'une nouvelle zone soit validée pour pouvoir obtenir un nouveau montant de prestation.

Plus précisément la mémoire de la carte est constituée par une pluralité de points de mémoire. Chaque point de mémoire, en fonctionnement normal, peut avoir deux états binaires. Un état "vierge" et un état "inscrit". La mémoire est divisée en une première zone contenant des informations fixes, une zone de validation et une pluralité de zones de dépense dont l'accès est contrôlé par l'état de la zone de validation. Chaque point de mémoire a une adresse physique dans la mémoire, et cette adresse permet au lecteur de carte de faire passer à l'état "inscrit" le point correspondant à cette adresse. Chaque point de mémoire dans une zone de dépense correspond à une unité de fourniture de prestation, la valeur de l'unité étant définie par les informations fixes enregistrées dans la première zone de mémoire.

Dans les systèmes connus, on trouve une zone de validation dont les adresses physiques vont en se suivant, et une succession de zones de dépense validables successivement et dont les points mémoire à "inscrire successivement" correspondent à des points de mémoire dont les adresses physiques vont en se suivant. Le système est protégé par une clé de codage mémorisée dans la carte et par des circuits de décodage et de comparaison qui contrôlent l'accès à la zone de validation.

Comme on l'a déjà exposé l'invention est basée sur un principe très différent qui consiste dans le fait que, si l'on considère un point mémoire de la carte ayant une adresse physique donnée, seule le lecteur de carte peut savoir s'il s'agit d'un point de validation ou d'un point de dépense, et, dans le cas d'un point de dépense, de quel point de validation il dépend. Un fraudeur ne peut donc prévoir de façon sûre quelle est l'adresse physique du point de validation à inscrire pour valider une nouvelle zone de dépense. De plus, comme cette relation dépend d'une information particulière stockée dans chaque carte, la connaissance par un fraudeur de la signification des adresses physiques de la mémoire d'une carte donnée ne permet pas à celui-ci de connaître à priori la signification des adresses physiques d'une autre carte.

Sur la figure 1, le diagramme A montre un tableau de relation entre des adresses de référence des points de mémoire de la carte et la signification du point de mémoire correspondant. Par signification d'un point de mémoire il faut entendre que ce point est un point de validation ou un point de dépense, et, s'il s'agit d'un point de dépense de quel point de validation il dépend. Dans le diagramme A la ligne supérieure correspond aux adresses de référence, la ligne intermédiaire à la signification du point de mémoire correspondant, et la ligne inférieure à la liaison qui existe entre un point de validation et les points de dépenses associés. Sur ce diagramme A on n'a pris en compte pour la numérotation des adresses que les points de mémoire de validation et de dépense et non les points de mémoire correspondant aux informations fixes de la zone $Z_F$.

Dans l'exemple considéré il y a 110 points de mémoire répartis également entre 10 secteurs référencés $Z_0$ à $Z_9$. Dans chaque secteur $Z_i$, le point mémoire portant la première adresse de référence est le point de validation des dix points de mémoire suivants. En d'autres termes aux adresses de références, 0, 12, 23... 99 il correspond des points de validation $V_0$, $V_1$ ..$V_9$. Dans la zone $Z_0$, les points d'adresse de référence 1,2... 11 correspondent aux points de dépense $C_{0,1}$, $C_{0,2}$... $C_{0,10}$ ;... et aux points d'adresse de référence 100, 101... 109, il correspond les points de dépense $C_{9,1}$ ... $C_{9,10}$ associés au point de validation $V_9$. En outre dans l'utilisation considérée, en fonctionnement normal, les points de validation $V_i$ doivent être inscrits dans l'ordre des indices croissants, et les fournitures successives de prestation se font en inscrivant des points de dépense $C_{i,j}$ dans l'ordre croissant de l'indice j.

Ainsi le diagramme A définit un tableau d'adresses de référence (TAR) qui permet d'associer à chaque adresse de référence un point de validation $V_i$ ou un point de dépense $C_{i,j}$, et un tableau de relation de référence (TRR) qui donne l'ordre d'inscription des points de validation, la relation entre un point de validation et les points de dépense associés et pour un meme point de validation $V_i$ l'ordre d'inscription des points de dépense $C_{i,j}$

Si l'on considère maintenant le diagramme B il donne la relation entre l'adresse physique d'un point de mémoire et la signification de ce point. Par exemple à l'adresse 0 correspond le point de dépense $C_{2,1}$ ; à l'adresse 4 le point de validation $V_2$ .... à l'adresse 109 le point de dépense $C_{1,1}$. Un tableau de permutation TP établit une relation biunivoque entre l'adresse de référence d'un point particulier $V_i$ ou $C_{i,j}$ et l'adresse physique dans la mémoire de la carte de ce même point. Ce tableau de permutation TP est élaboré à l'aide d'un algorithme préétabli (ALG) qui est fonction d'une information fixe (IF) mémorisée dans la zone $Z_F$ de la mémoire. A partir de l'algorithme commun ALG chaque information fixe permet d'élaborer un tableau de permutation TP spécifique.

Dans l'exemple décrit ci-dessus le tableau d'adresses de référence (TAR) et le tableau de relation de référence (TRR) correspondent à une disposition "logique". Cependant l'homme de l'art comprend aisément que les tableaux TAR et TRR pourraient correspondre à une disposition arbitraire mais connue des adresses des $V_i$ et des $C^{i,j}$

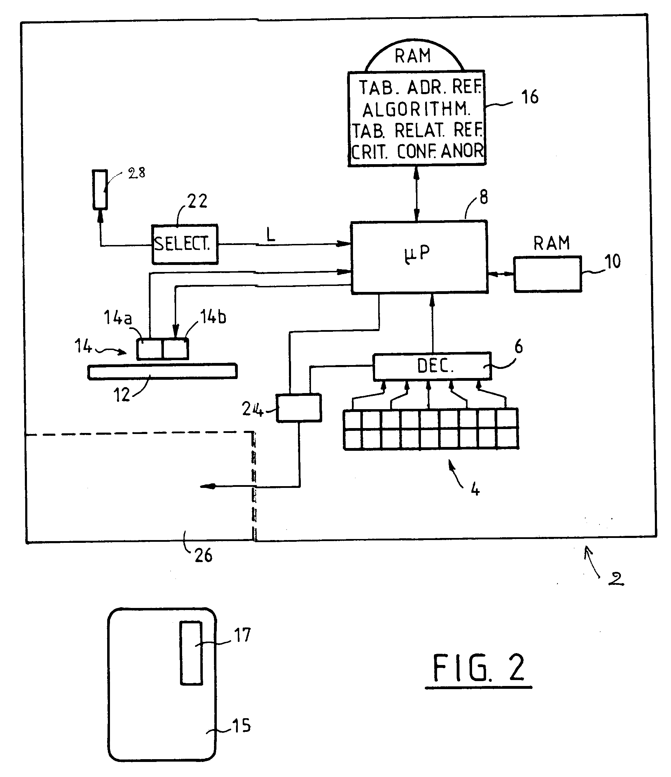

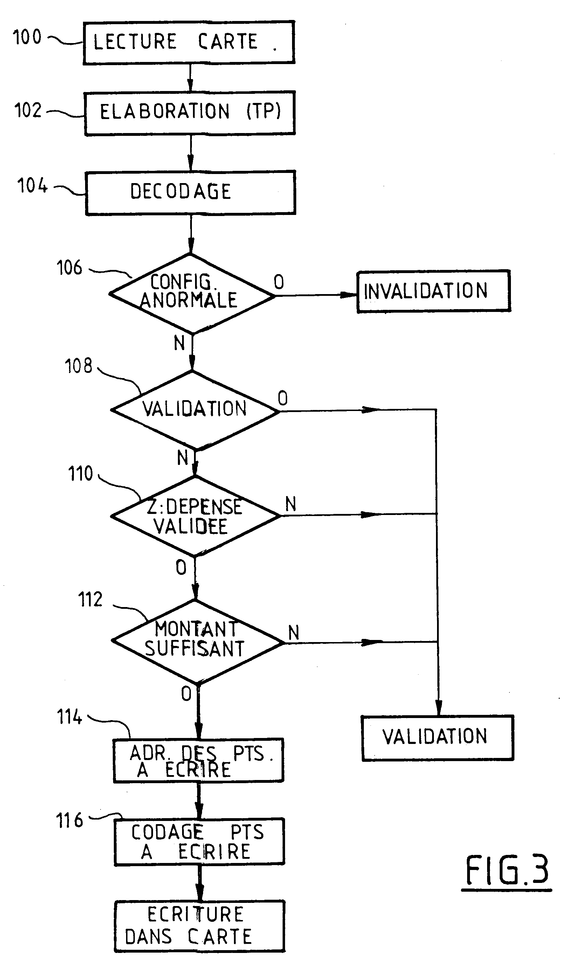

En se référant aux figures 2 et 3, on va décrire un mode particulier de réalisation d'un système de fourniture de prestation. Il s'agit d'une borne de stationnement payant par exemple du type décrit dans la demande de brevet français numéro 85.08608.

La figure 2 montre les éléments essentiels de la machine 2 de commande de distribution de tickets de stationnement. Elle comprend un clavier 4 qui permet d'introduire dans la machine le montant de taxe de stationnement que l'usager veut obtenir. Le montant entré par le clavier 4 est converti par un circuit décodeur 6 en un nombre correspondant d'unités de dépense. Le nombre d'unités est transmis à un microprocesseur 8 qui stocke temporairement cette information dans une mémoire de travail 10. La machine 2 comprend également une fente 12 d'introduction de cartes telles que 15 ou plus généralement d'un support d'informations.

Fonctionnellement la carte 15 constitue un support d'enregistrement d'informations binaires. La mémorisation de l'information se fait soit sous forme magnétique , la mémoire étant alors constituée par une piste magnétique, soit sous forme électronique, la mémoire étant alors constituée par un circuit intégré comprenant essentiellement un circuit mémoire du type PROM, EPROM, EEPROM ou équivalent. A la fente d'introduction de cartes 12 est associée une tête de lecture/écriture 14. La tête de lecture/écriture 14 qui est électronique ou magnétique selon le type de carte utilisé, permet de lire la totalité des informations contenues dans la mémoire de la carte et d'écrire une information aux adresses physiques spécifiées par la machine. La machine comprend encore une mémoire 16 secourue du type RAM qui contient le programme correspondant aux séquences opératoires qui vont être décrites ultérieurement, la table d'adresses de référence TAR, la table de relations de référence TRR, les éléments fixes de l'algorithme ALG servant à élaborer le tableau de permutation TP, et les éléments fixes de définition de l'algorithme de critère de configuration anormale (CCA) qui sera explicite ultérieurement.

Lorsque l'usager introduit sa carte 15 dans la fente 12 du lecteur de carte, le lecteur 14a lit la totalité des informations stockées dans la mémoire 17 de la carte. Le microprocesseur 8 reçoit l'information fixe IF et la liste des adresses physiques des points de mémoire inscrits dans la carte, ce qui correspond à l'étape 100.de l'organigramme de la figure 3. A partir de l'information fixe IF et des éléments d'algorithme (ALG) stockés dans la mémoire 16, le microprocesseur 8 élabore l'inverse du tableau de permutation (TP) spécifique à la carte (étape 102 de l'organigramme de la figure 3). A partir de l'inverse du Tableau de permutation (TP) les adresses physiques lues sont décodées pour donner les adresses de référence correspondantes (étape 104).

Dans l'étape suivante 106 on met en oeuvre l'algorithme de critères de configurations anormales (CCA). Cet algorithme est basé sur le tableau de relation de références (TRR). Il consiste à s'assurer qu'il n'y a pas de points de mémoire inscrits correspondant à une zone de dépense non validée, ou que, dans une zone de dépense, les points mémoire inscrits occupent des rangs convenables etc...

Si l'algorithme détecte des configurations anormales, la carte est refusée ou invalidée. Si la réponse est non, le programme exécute l'étape 108 qui consiste à savoir si l'usager veut effectuer une revalidation, ou une validation initiale de sa carte. Cette information est délivrée par un sélecteur de pièces 22 qui délivre au microprocesseur 8 un signal L. Si ce signal n'est pas présent l'étape 110 vérifie qu'il existe bien une zone de dépenses validée. S'il en existe au moins une, le programme vérifie que dans les zones de dépenses validées il reste un montant disponible supérieur ou égal à celui de la transaction demandée. Pour cela l'usager entre à l'aide du clavier 4 le montant de la prestation souhaitée. Le décodeur 6 convertit ce montant en un nombre d'unités. Cette information est stockée temporairement dans la mémoire RAM 10 et elle est comparée au nombre d'unités disponibles dans la ou les zones de dépenses validées (étape 112). Si le nombre de points de dépenses validés est suffisant le programme passe à l'étape suivante 114. Dans cette étape le microprocesseur 8 effectue les opérations suivantes : Il détermine les adresses de référence $V_{i,j}$ des points de dépense qui doivent être inscrits en tenant compte de la table de relations de référence (TRR). Ces adresses de références sont temporairement stockées dans la mémoire 10. Puis le microprocesseur élabore le tableau de permutations TP à partir de l'information fixe IF déjà lue dans la mémoire de la carte et des informations ALG mémorisées dans la mémoire 16. A partir des adresses de références $C_{i,j}$ déjà mémorisées et du tableau de permutation (TP) le micro-ordinateur 8 élabore les adresses physiques des points de mémoire de la mémoire 17 de la carte qui doivent être inscrits. C'est l'étape référencée 116 sur la figure 3. A partir des adresses physiques ainsi élaborées le micro-processeur 8 transmet à la tête de lecture/écriture 14, les informations nécessaires pour inscrire, c'est-à-dire faire changer d'état binaire les points de mémoire de la mémoire 17 de la carte ayant les adresses physiques élaborées précédemment.

Lorsque toutes ces opérations se sont déroulées le circuit 24 donne l'ordre à la machine 26 de fourniture de délivrer le ticket correspondant à la taxe de stationnement qui a été prélevée dans la mémoire de la carte.

Dans la partie précédente de la description on a supposé que la carte comportait assez de points de dépenses validés c'est-à-dire que les réponses aux tests des étapes 108, 110 et 112 étaient positives.

On va supposer maintenant que le test 108 est négatif c'est à dire que la carte n'a aucun point de validation qui est inscrit. Cela signifie que l'usager utilise sa carte pour la première fois. Il doit donc introduire un certain montant dans la fente d'introduction de pièces 28 pour obtenir la validation d'une ou de plusieurs zones de sa carte. Le sélecteur 22 délivre un signal L représentatif du montant introduit. Le microprocesseur convertit ce montant en un nombre de zones à valider. IL s'agit alors de la première zone ou des premières zones. Le micro-processeur élabore les adresses de référence des points de validation correspondants, ainsi que le tableau de permutation TP à partir de l'information fixe IF déjà lue. A partir de la ou des adresses de référence $V_j$ et du tableau de permutation TP le système élabore la ou les adresses physiques correspondantes. Le microprocesseur commande, via la tête de lecture /écriture 14, l'inscription du ou des points de mémoire de la mémoire 17 de la carte 15 dont la ou les adresses physiques ont été élaborées précédemment. La carte est ainsi validée pour une ou plusieurs zones.

Si c'est le test 112 qui est négatif cela signifie qu'il y a déjà des zones validées, mais que le montant restant disponible est insuffisant. En conséquence l'usager doit valider une ou plusieurs nouvelles zones. Il procède comme on l'a décrit précédemment. La différence réside dans le fait que le système a déjà lu les adresses physiques des points de mémoire inscrits, les a déjà convertis en adresses de référence qui ont été mises temporairement dans la mémoire RAM 10. En appliquant le Tableau de Relations de Références (TRR) le microprocesseur détermine l'adresse ou les adresses de référence du ou des points de validation à inscrire. L'adresse ou les adresses de référence sont converties en adresse physique et le ou les points de mémoire ayant cette ou ces adresses sont inscrits.

A la lecture de la description précédente on comprend que le système selon l'invention permet effectivement d'utiliser des supports d'informations rechargeables dans des conditions très satisfaisantes de sécurité. Comme on l'a déjà indiqué les adresses physiques des points de validation changent d'un support d'informations à un autre puisque le tableau de permutations (TP) dépend de l'information fixe (IF) mémorisée dans le support d'informations.

Si le fraudeur inscrit au hasard des points de mémoire dans la carte, la probabilité pour qu'il inscrive à la première tentative le point de mémoire dont l'adresse physique correspond au point de validation à inscrire en premier est très faible. Si le premier point inscrit correspond à un point de dépenses, à la première tentative d'introduction de la carte dans un lecteur, celui-ci détectera qu'il y a une configuration anormale et la carte est invalidée.

En outre on comprend que ce système peut fonctionner avec un grand nombre de types de de supports d'informations différents. Il suffit que chaque point d'enregistrement puisse être repéré par la machine de traitement, et que chaque point mémoire présente un etat initial et un état modifié ou inscrit sans qu'il soit possible de passer de l'état inscrit à l'état initial. La carte peut être en carton et présenter des cases,chaque case correspondant à un point de mémoire. Il peut également s'agir d'une carte à piste magnétique, chaque bit de la piste correspondant à un point de mémoire. La carte peut enfin être du type à mémoire électronique comme on l'a déjà indiqué.

La description précédente correspond au système de base de l'invention.Selon ce système l'inscription d'une information de validation ou de dépense ne nécessite que l'inscription d'un seul point de mémoire ayant une adresse physique donnée. Selon un deuxième mode de mise en oeuvre de l'invention, l'inscription d'une information de validation ou de dépense necessite l'inscription de plusieurs points de mémoire ayant chaqun une adresse de référence et une adresse physique. La table d'adresses de référence est alors modifiée puisque, à chaque information de validation il correspond plusieurs adresses de référence qui ne se suivent pas, et à chaque information de dépense il correspond plusieurs adresses de référence, ces différentes adresses de référence pouvant elles-mêmes être imbriquées. On retrouve bien sur une disposition du même type dans la mémoire de la carte en ce qui concerne les adresses physiques.Le tableau de permutation( TP') est bien sur plus complexe puisqu'il définit une relation biunivoque entre chaque adresse de référence des points d'information et chaque adresse physique des points de mémoire dans le support d'information. On comprend également que pour les mêmes raisons, l'algorithme de critères de configurations anormales sera aussi plus complexe. Cependant cette variante de mise en oeuvre permet d'obtenir une sécurité encore accrue vis-à-vis des tentatives de fraudes. En effet il faut que le fraudeur découvre qu'à chaque information de validation ou de dépense il correspond plusieurs adresses physiques, par exemple deux, et que de plus il trouve, parmi les adresses physiques non encore inscrites, les deux adresses physiques qui correspondent à la même information. On comprend qu'une telle probabilité est très faible.

Dans la description précédente on a envisagé seulement le cas où la carte à mémoire sert pour l'obtention d'un seul type de prestation, par exemple l'acquittement de taxes de stationnement. Or une même carte peut servir pour obtenir la fourniture de plusieurs prestations différentes. Par exemple la prestation 1 correspondant à une taxe de stationnement, la prestation 2 correspondant à des communications téléphoniques et la prestation 3 correspondant à la possibilité de faire des achats dans une chaîne spécifique de magasins.

Pour chaque prestation il existe des machines spécifiques de fourniture de chaque prestation. De même dans la mémoire de chaque carte il existe des points ou des informations de validation et de dépense pour la fourniture de chaque prestation.

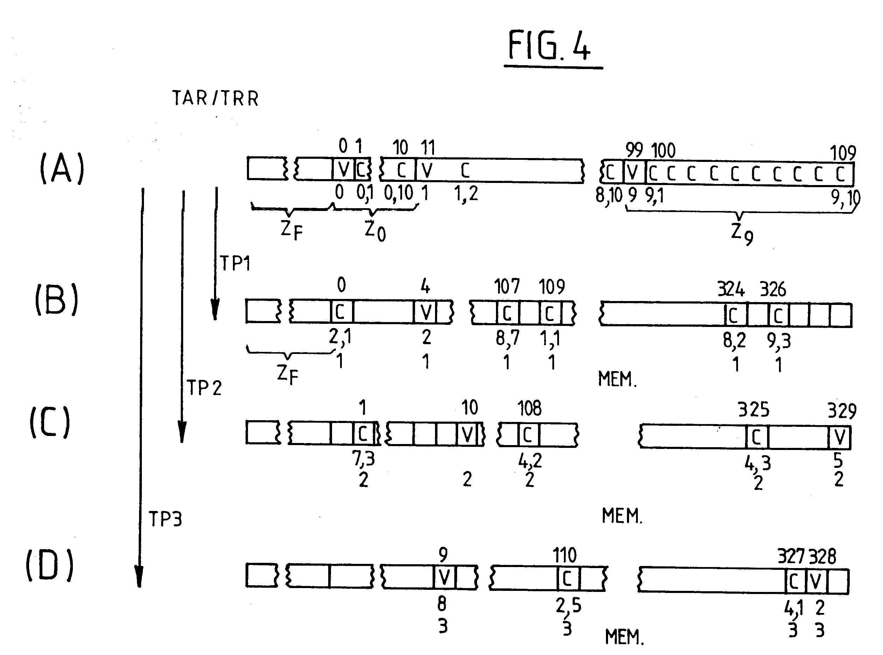

En se référant à la figure 4 on comprendra mieux les modifications introduites pour la mise en oeuvre de cette variante de l'invention.

Le diagramme A de la figure 4, montre une table d'adresses de référence (TAR) et de relations de référence TRR qui est, par exemple, identiques à celles qui sont représentées sur le diagramme A de la figure 1. Ces tables mêmes TAR et TRR sont mémorisées dans toutes les machines indépendamment de la prestation qu'elles permettent d'obtenir. La table d'adresses de référence comporte n adresses, 110 dans l'exemple considéré.

Si l'on considère maintenant une carte à mémoire utilisable pour obtenir la fourniture de l'une quelconque des trois prestations envisagées elle comprend une zone $Z_f$ d'informations fixes comprenant en particulier l'information fixe $I_f$, et $3n$ adresses physiques de points de mémoire inscriptibles, 330 dans l'exemple particulier décrit. Pour chacune des trois prestations qu'il est possible d'obtenir, la machine correspondante comporte en mémoire des éléments fixes d'algorithme. Ces éléments fixes sont respectivement référencés $ALG_1$, $ALG_2$, $ALG_3$ et sont respectivement associés aux prestations 1, 2 et 3. En exécutant ces algorithmes $ALG_1$, $ALG_2$ et $ALG_3$ les tables de permutations $TP_1$, $TP_2$, $TP_3$ sont définies de telle manière que, pour une valeur de IF considérée, les adresses physiques de la mémoire de la carte associées au tableau d'adresses de référence TAR, respectivement par les tables de permutations, $TP_1$, $TP_2$ et $TP_3$ soient toutes différentes. Les diagrammes B, C et D illustrent un exemple d'adresses physiques des points d'information de la table commune d'adresses de référence, correspondant respectivement aux tableaux de permutation $TP_1$, $TP_2$ et $TP_3$.

Plus précisément sur chacun des diagrammes B, C et D on a indiqué dans certains cas la signification du point d'information considéré (C pour un point de dépense, et V pour un point de validation). Au dessus de chaque case on a inscrit son adresse physique dans la mémoire. Au dessous de chaque case on a mentionné sur la première ligne ou reporté les informations correspondantes au tableau de relations de référence (j pour V et $J_1$i pour C) et sur la deuxième ligne on a reporté la prestation considérée 1, 2 ou 3.

On va maintenant décrire le fonctionnement d'un système permettant aux usagers d'obtenir les trois prestations envisagées. Chaque machine a exactement la même structure que celle qui a déjà été décrite en liaison avec la figure 2. Bien entendu la partie 26 de chaque machine 2 est spécialisée pour la fourniture de la prestation considérée, distribution de tickets de stationnement, établissement d'une communication téléphonique etc...

En revanche une partie du contenu de la mémoire 18 est adaptée à la prestation fournie. Les tables d'adresses de référence et de relations de référence TAR et TRR sont les mêmes pour toutes les machines. Les éléments fixes d'algorithme $ALG_1$, $ALG_2$ et $ALG_3$ sont spécialisés. L'algorithme de critères de configuration anormales est aussi le même pour toutes les machines.

Lorsque l'usager introduit sa carte dans la fente 12 du lecteur de cartes 14, ce dernier lit d'abord l'information fixe IF. A partir de cette information et des éléments fixes d'algorithme, $ALG_2$ par exemple, il élabore la table de permutation $TP_2$ correspondante, ce qui donne l'ensemble des adresses physiques de la mémoire associées à la fourniture de la prestation considérée, la prestation 2 dans l'exemple présentement décrit. Le lecteur 14 lit l'état des points mémoire (vierge ou inscrit) ayant les adresses élaborées précédemment. A partir de ce stade le processus déjà écrit en liaison avec les figures 2 et 3 se déroule comme à partir de l'étape 102.

Dans l'exemple décrit en liaison avec la figure 4, les tables d'adresses de référence TAR et de relations de référence TRR sont les mêmes pour toutes les prestations. Cela signifie qu'il y a autant d'adresses de référence N qu'il y a d'adresses physiques dans la mémoire de la carte (N). Parmi ces adresses de référence $n_1$ correspondent à la prestation 1, $n_2$ à la prestation 2 et $n_3$ à la position 3 ($n_1 + n_2 + n_3 = N$). Les éléments fixes d'algorithme ALG1 permettent, via la table TP1, d'associer à chacune des $n_1$ adresses de référence pour la prestation 1 $n_1$ adresses physiques dans la mémoire de la carte. On a une disposition similaire pour les prestations 2 et 3. On a alors une relation biunivoque entre l'ensemble des adresses de référence et l'ensemble des adresses physiques par l'intermédiaire des tables de permutation $TP_1$, $TP_2$ et $TP_3$.

Dans ce cas le fonctionnement de la machine 2 est exactement le même que celui qui a été décrit en liaison avec les figures 2 et 3. Lorsque l'usager a introduit sa carte dans la fente 12, le lecteur 14 lit l'ensemble des informations contenues dans la mémoire de la carte, entre autres l'information fixe IF. Le microprocesseur élabore la table de permutation inverse $TP_1{}^{-1}$ si la machine fournit la prestation 1, et le reste du processus se déroule comme on l'a décrit en liaison avec la figure 3.

Il va de soi que, comme cela a été décrit précédemment, chaque information de validation ou de dépense peut également être mémorisée en inscrivant plusieurs points de mémoire. Par exemple chaque information est mémorisée en inscrivant deux points de mémoire. Une telle solution nécessite certes deux fois plus de positions de mémoire pour une même quantité d'informations mais elle permet d'accroître encore la fiabilité du système.

## Revendications

1.  Système de fourniture de prestations à revalidation comprenant une pluralité de supports d'informations (15), chaque support comportant une pluralité de points de mémoire inscriptibles ayant chacun une adresse physique, et une pluralité de machines de fourniture de prestation (2) comportant des moyens de lecture (14a) de l'état desdits points de mémoire et des moyens d'écriture (14b) pour inscrire des points de mémoire, système dans lequel il y a plusieurs ensembles d'informations de dépenses (C), chaque information de dépense ne pouvant être inscrit pour obtenir une prestation que si une information de validation (V) correspondant audit ensemble a été préalablement inscrite, chaque support d'informations (15) comportant une information fixe (IF) propre au support et lisible par chaque machine, caractérisé en ce que chaque machine comporte des moyens (8) pour définir, en fonction de ladite information fixe, une configuration d'adresses physiques des points de support (TAR) correspondant respectivement aux informations de validation (V) et aux informations de dépense (C), et les relations (TRR) entre chaque information de validation et l'ensemble correspondant d'informations de dépenses et des moyens (CCA) pour n'autoriser la fourniture de la prestation que si les points mémoire inscrits satisfont auxdites configurations et auxdites relations.

2.  Système selon la revendication 1, caractérisé en ce que chaque machine comprend des moyens (8, 16) pour comparer les adresses physiques des points de mémoire inscrits dans le support d'informations à ladite configuration d'adresses physiques et auxdites relations (TRR).

3. Système de fourniture de prestation à revalidation, selon l'une quelconque des revendications 1 et 2, caractérisé en ce que lesdits moyens de définition de ladite configuration d'adresses physiques et desdites relations comprennent des moyens (16) pour mémoriser une table d'adresses de référence (TAR) et une table de relations de référence (TRR) pour associer à chaque adresse de référence au moins une partie d'une information de dépense (C) ou d'une information de validation (V), et pour chaque adresse de référence associée à une information de dépense, la ou les adresses de l'information de validation (V) dont l'information de dépense dépend, et des moyens pour élaborer une table de permutation (TP) à partir d'un algorithme (ALG) prédéterminé commun à toutes les machines et de ladite information fixe (IF), ladite table de permutation TP établissant une relation biunivoque entre l'ensemble desdites adresses de références et l'ensemble desdites adresses physiques.

4. Système selon la revendication 3, caractérisé en ce que ladite table de relations de référence (TRR) permet de définir une relation d'ordre entre les adresses de référence des points de mémoire d'un même ensemble d'informations de dépense (C), ledit ordre correspondant à celui dans lequel les points de mémoire du support d'informations (15) doivent être inscrits pour la fourniture des prestations.

5. Système selon l'une quelconque des revendications 1 à 4, caractérisé en ce que chaque information de validation (V) et de dépense (C) est associée à une seule adresse physique et donc à une seule adresse de référence.

**Claims**

1. Revalidatable service supplying system comprising a plurality of data media (15), each medium having a plurality of enterable memory points each having a physical address, and a plurality of service supplying machines (2) having means (14a) for reading the state of the said memory points and write means (14b) for entering the memory points, said system having several expenditure data sets (C), wherein each expenditure data item can only be entered to obtain a service if a validation data item (V) corresponding to the said set has been entered beforehand, each data medium (15) having fixed information (IF) which is specific to the medium and can be read by each machine, characterised in that each machine has means (8) for defining as a function of the said fixed information a configuration of physical addresses of the medium points (TAR) corresponding to the validation data (V) and the expenditure data (C) respectively, and the relations (TRR) between each validation data item and the corresponding expenditure data set and means (CCA) for authorising the supply of the service if the memory points entered satisfy the said configurations and the said relations.

2. System according to claim 1, characterised in that each machine comprises means (8, 16) for comparing the physical addresses of the memory points entered in the data medium with the said configuration of physical addresses and the said relations (TAR).

3. Revalidatable service supplying system according to either of claims 1 and 2, characterised in that the said means for defining the said configuration of physical addresses and the said relations comprise means (16) for storing a reference address table (TAR) and a reference relation table (TRR) in order to associate with each reference address at least part of an expenditure data item (C) or a validation data item (V), and for each reference address associated with an expenditure data item, the address or addresses of the validation data (V) on which the expenditure data depends, and means for formulating a permutation table (TP) from a predetermined algorithm (ALG) common to all of the machines and the said fixed information (IF), the said permutation table (TP) establishing a one-to-one relation between all of the said reference addresses and all of the said physical addresses.

4. System according to claim 3, characterised in that by virtue of the said reference relation table (TRR), it is possible to define an order relation between the reference addresses of the memory points of one expenditure data set (C), the said order corresponding to the order in which the memory points of the data medium (15) are to be entered in order to supply services.

5. System according to any one of claims 1 to 4, characterised in that each validation data item (V) and expenditure data item (C) is associated with a single physical address and therefore a single reference address.

**Patentansprüche**

1. System für die Lieferung von Leistung mit erneuerbarer Gültigkeit, mit einer Mehrzahl von Informationsträgern (15), von denen jeder eine Mehrzahl von eine physikalische Adresse aufweisenden, beschreibbaren Speicherplätzen umfaßt, und einer Mehrzahl von Maschinen für die Lieferung von Leistung (2), die Mittel zum Lesen (14a) des Zustandes der Speicherplätze und Schreibmittel (14b) zum Beschreiben der Speicherplätze umfassen, wobei in dem System eine Mehrzahl von Verbrauchsinformations-Einheiten (C) vorhanden sind, wobei jede Verbrauchsinformation nur dann eingeschrieben werden kann, um eine Leistung zu erhalten, wenn eine der Einheit entsprechende Gültigkeitsinformation (V) vorher eingeschrieben worden ist, wobei jeder Informationsträger (15) eine ihm eigentümliche feste Information (IF), die von jeder Maschine lesbar ist, aufweist, dadurch gekennzeichnet, daß jede Maschine versehen ist mit Mitteln (8) zum Definieren einer Konfiguration der den Gültigkeitsinformationen (V) bzw. den Verbrauchsinformationen (C) entsprechenden physikalischen Adressen der Trägerplätze (TAR) und der Beziehungen (TRR) zwischen jeder Gültigkeitsinformation und der den Verbrauchsinformationen entsprechenden Einheit in Abhängigkeit von der festen Information und Mitteln (CCA), die die Lieferung von Leistung nur dann zulassen, wenn die beschriebenen Speicherplätze die Konfigurationen und die Beziehungen erfüllen.

2. System gemäß Anspruch 1, dadurch gekennzeichnet, daß jede Maschine Mittel (8, 16) umfaßt, um die physikalischen Adressen der beschriebenen Speicherplätze im Informationsträger mit der Konfiguration der phsikalischen Adressen und den Beziehungen (TRR) zu vergleichen.

3. System für die Lieferung von Leistung mit erneuerbarer Gültigkeit gemäß einem der Ansprüche 1 und 2, dadurch gekennzeichnet, daß die Mittel für die Definition der Konfigurationen von physikalischen Adressen und der Beziehungen versehen sind mit Mitteln (16) zum Speichern einer Tabelle von Referenzadressen (TAR) und einer Tabelle von Referenzbeziehungen (TRR), um jede Referenzadresse wenigstens einem Teil einer Verbrauchsinformation (C) oder einer Gültigkeitsinformation (V) zuzuordnen und um jeder einer Verbrauchsinformation zugeordneten Referenzadresse die Adresse(n) der Gültigkeitsinformation (V), von der die Verbrauchsinformation abhängt, zuzuordnen, und Mitteln zum Auswerten einer Permutationstabelle (TP) anhand eines allen Maschinen gemeinsamen, vorgegebenen Algorithmus (ALG) und der festen Information (IF), wobei die Permutationstabelle (TP) zwischen der Gruppe der Referenzadressen und der Gruppe der physikalischen Adressen eine eineindeutige Beziehung herstellt.

4. System gemäß Anspruch 3, dadurch gekennzeichnet, daß die Tabelle der Referenzbeziehungen (TRR) die Definition einer Beziehung bezüglich der Reihenfolge zwischen den Referenzadressen der Speicherplätze derselben Einheit von Verbrauchsinformationen (C) erlaubt, wobei die Reihenfolge derjenigen entspricht, in der die Speicherplätze des Informationträgers (15) für die Lieferung von Leistung beschrieben werden.

5. System gemäß einem der Ansprüche 1 bis 4, dadurch gekennzeichnet, daß jede Information bezüglich der Gültigkeit (V) und des Verbrauchs (C) einer einzigen physikalischen Adresse und daher einer einzigen Referenzadresse zugeordnet ist.

# FIG. 1

RAM

| TAB. ADR. REF. |
| ALGORITHM. |
| TAB. RELAT. REF. |
| CRIT. CONF. ANOR. |

16

28

22

SELECT.   L

8

μP

RAM   10

14a   14b

14

12

24

DEC.   6

4

26

2

17

15

FIG. 2

100 — LECTURE CARTE .

102 — ELABORATION (TP)

104 — DECODAGE

106 — CONFIG. ANORMALE — O → INVALIDATION

N

108 — VALIDATION — O →

N

110 — Z:DEPENSE VALIDEE — N →

O

112 — MONTANT SUFFISANT — N →

O

114 — ADR. DES PTS. A ECRIRE

116 — CODAGE PTS A ECRIRE

ECRITURE DANS CARTE

VALIDATION

FIG.3

# FIG. 4

TAR / TRR

(A)

(B)

(C)

(D)

EP 0 277 440 B1